# DEMANDE DE BREVET EUROPEEN

(11) **EP 2 146 485 A1**
(43) Date de publication de la demande: **20.01.2010**
(21) Numéro de dépôt: 09165580.3
(22) Date de dépôt: 15.07.2009
(51) Int. Cl.: H04L 29/08

(54) **Procédé d'accès à des ressources du Web et serveur mettant en oeuvre un tel procédé**

(30) Priorité: 17.07.2008 FR 0854868
(71) Demandeur: Alcatel Lucent, 75008 Paris (FR)
(72) Inventeur: Jaouen, Laurent, 35000 Rennes (FR)
(74) Mandataire: Hedarchet, Stéphane

(57) **Abrégé**

La présente invention concerne un procédé d'accès à des ressources (52) du Web destinées à recevoir une donnée d'entrée émise par un terminal (41), selon un protocole de communication standard, pour déterminer une donnée de sortie codée selon un langage applicatif conforme à un format déterminant des règles de présentation de données, **caractérisé en ce qu**'il comprend les étapes suivantes:
- l'étape pour le terminal (41) de transmettre à un serveur (30) d'accès des données d'entrée (40) comprenant notamment une adresse de ces ressources (52) du Web,
- l'étape pour le serveur (30) de générer une séquence d'accès (50) successifs aux ressources (52) du Web à partir de ces données d'entrée,
- l'étape de mettre en oeuvre automatiquement cette séquence d'accès (50) entre le serveur (30) et les ressources (52) du Web en effectuant pour chaque accès :
i) l'émission (50) par le serveur, selon le protocole de communication standard, d'une donnée d'entrée utilisée par les ressources (52) pour générer une donnée de sortie transmise (54) au serveur (30) et codée selon le langage applicatif conforme au format de présentation de données,
ii) l'extraction par le serveur (30) de la donnée de sortie transmise par les ressources (52) en utilisant le format de présentation de données pour identifier cette donnée de sortie dans la transmission (54) émise par les ressources (52),

- l'étape pour le serveur (30) de transmettre (62) les données de sortie ainsi extraites vers le terminal (41) selon le protocole de communication standard.

## Description

La présente invention se rapporte à procédé d'accès à des ressources du Web ainsi qu'à un serveur mettant en oeuvre ce procédé.

Une application majeure du réseau Internet est le Web, également dénommé « World Wide Web », « www » ou la « Toile ». Plus précisément, le Web est un ensemble de ressources accessibles, via le réseau Internet, à un terminal équipé d'un navigateur pouvant afficher des données transmises par ces ressources du Web.

Pour cela, ces ressources sont stockées dans des serveurs connectés au réseau Internet et utilisant un même protocole de transport de données que les navigateurs accédant à ces ressources.

A titre d'exemple, le protocole HTTP - pour « HyperText Transfer Protocol » en anglais - a ainsi été développé dans le réseau Internet. Ce protocole permet notamment la transmission de requêtes ou de commandes traitées par les serveurs du Web.

Typiquement, le protocole HTTP permet d'émettre une commande telle que la commande « GET », qui entraîne une description des ressources du Web identifiées dans la commande, ou telle que la commande « POST », qui permet d'obtenir le traitement de données d'entrée, transmises dans la commande, par des ressources du Web également identifiées dans la commande.

Par ailleurs, des adresses sont attribuées à ces ressources du Web afin de permettre la transmission de requêtes à travers le réseau Internet. Plus précisément, cette adresse est dénommée URL pour « Uniform Ressource Locator » en anglais. Elle indique un nom de domaine, une localisation dans le réseau Internet ou un réseau à partir duquel il est possible d'accéder aux ressources associées à cet URL.

L'accès aux ressources du Web étant ainsi assuré, il est également nécessaire de munir un terminal Web de moyens permettant d'afficher les données issues de ces ressources afin que les utilisateurs puissent suivre leurs accès au Web.

De fait, des formats ont été développés pour harmoniser la présentation de données issues d'applications du Web. A titre d'exemple, le format XML, pour « extensible Markup Language » en anglais, est largement utilisé sur le Web. Ce format établit des règles d'affichage de données au moyen de balises structurant la présentation de données d'entrée - fournies aux ressources - ou de sorties - fournies par ces ressources.

Le format XML est compatible avec les langages applicatifs codant, de façon pratique, le traitement des données. A titre d'exemple, on peut citer:
- le langage HTML, pour « HyperText Markup Language » en anglais, dédié notamment à la représentation de pages Web.
- le langage SOAP, pour « Simple Object Access Protocol » en anglais, dédié notamment à l'échange de données entre serveurs ou systèmes du Web.
- le langage RSS, pour « Really Simple Syndication » en anglais, dédié notamment à la diffusion d'alertes, de nouvelles ou de liste sur le Web.

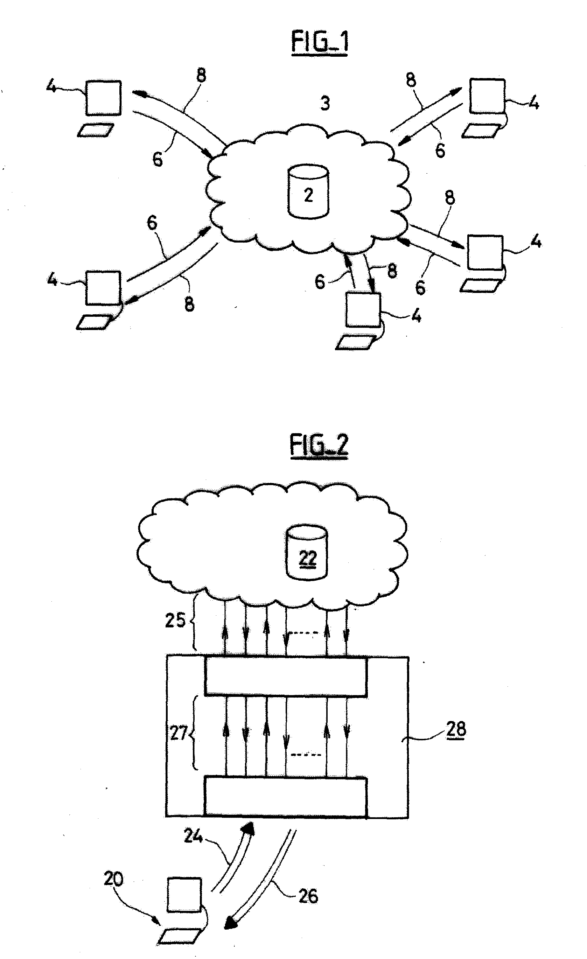

Pour illustrer les différents éléments introduits ci-dessus, la figure 1 représente des ressources 2 du réseau Internet 3 auxquelles accèdent des terminaux 4.

A cet effet, ces terminaux 4 sont munis de navigateurs utilisant le protocole HTTP pour émettre des requêtes comprenant au moins une donnée d'entrée 6 telle qu'une adresse URL.

Une requête comprenant cette donnée d'entrée 6 est transmise par le réseau Internet 3 jusqu'aux ressources 2 qui traitent alors cette donnée d'entrée 6 pour générer une donnée de sortie 8 codée dans le langage applicatif de la ressource utilisée.

Ainsi, en considérant que la donnée d'entrée 6 est un URL correspondant à une page Web, la donnée de sortie 8 peut être cette page Web codée dans le langage HTML. Cette dernière peut alors être affichée sur les terminaux 4 lorsque le navigateur associé à ces terminaux 4 prend en compte le langage applicatif HTML.

La présente invention résulte de la constatation qu'il existe de nombreuses ressources sur le Web mettant en oeuvre différents langages applicatifs. Dès lors, les utilisateurs du Web sont confrontés à la nécessité d'équiper leurs terminaux d'outils logiciels spécifiques à chaque langage applicatif pour accéder à ces différentes ressources, ce qui rend l'utilisation du Web complexe.

Il convient de noter que ce problème d'accès hétérogène se présente indépendamment de la nature des applications considérées du Web comme la consultation d'un site ou la réalisation d'un service à travers le Web.

En effet, la réalisation d'un service Web requiert l'indication d'un URL - comme pour l'accès à un site Web - et l'indication d'autres données d'entrée - comme un identifiant ou un numéro de carte de paiement - qui doivent correspondre au langage applicatif du site hébergeant le service considéré.

La présente invention vise à remédier à ce problème en fournissant un procédé qui permet d'accéder à des ressources du Web de façon simple et indépendante du langage applicatif mis en oeuvre par les ressources requises.

C'est pourquoi, la présente invention concerne un procédé d'accès à des ressources du Web destinées à recevoir une donnée d'entrée émise par un terminal, selon un protocole de communication standard, pour déterminer une valeur de sortie codée selon un langage applicatif conforme à un format déterminant des règles de présentation de données, **caractérisé en ce qu**'il comprend les étapes suivantes:
- l'étape pour le terminal de transmettre à un serveur d'accès des données d'entrée comprenant notamment une adresse de ces ressources du Web,
- l'étape pour le serveur de générer une séquence d'accès successifs aux ressources du Web à partir de ces données d'entrée,
- l'étape de mettre en oeuvre automatiquement cette séquence d'accès entre le serveur et les ressources du Web en effectuant :
   i) l'émission par le serveur, selon le protocole de communication standard, d'une donnée d'entrée utilisée par les ressources pour générer une donnée de sortie, transmise au serveur, codée selon le langage applicatif conforme au format d'affichage,
   ii) l'extraction par le serveur de la donnée de sortie transmise par les ressources en utilisant le format d'affichage de données pour identifier cette donnée de sortie dans la transmission émise par les ressources,
- l'étape pour le serveur de transmettre les données de sortie ainsi extraites vers le terminal selon le protocole de communication standard.
   Grâce à l'invention, il est possible d'accéder à des ressources mettant en oeuvre différents langages applicatifs à partir d'un seul type de procédé d'accès à ces ressources Web.
- l'étape pour le terminal 41 de transmettre à un serveur 30 d'accès des données d'entrée 40 comprenant notamment une adresse de ces ressources 52 du Web,
- l'étape pour le serveur 30 de générer une séquence d'accès 50 successifs aux ressources 52 du Web à partir de ces données d'entrée,
- l'étape de mettre en oeuvre automatiquement cette séquence d'accès 50 entre le serveur 30 et les ressources 52 du Web en effectuant pour chaque accès:
   i) l'émission 50 par le serveur, selon le protocole de communication standard (HTTP), d'une donnée d'entrée utilisée par les ressources 52 pour générer une donnée de sortie transmise 54 au serveur 30 et codée selon le langage applicatif (HTML, SOAP) conforme au format (XML) de présentation de données,
   ii) l'extraction par le serveur 30 de la donnée de sortie transmise par les ressources 52 en utilisant le format (XML) de présentation de données pour identifier cette donnée de sortie dans la transmission 54 émise par les ressources 52,
- l'étape pour le serveur 30 de transmettre 62 les données de sortie ainsi extraites vers le terminal 41 selon le protocole de communication standard (HTTP) ;
- l'étape de transmettre au serveur 30 une définition des ressources indiquant une adresse (URL) de ces ressources 52 et des moyens de mise en oeuvre de différentes opérations devant être suivies par le serveur 30 pour accéder à un service via ces ressources, les moyens de mise en oeuvre comprenant la description d'une séquence d'accès successifs qui doivent être effectués par le serveur 30 auprès des ressources 52 pour obtenir le service.

En effet, l'invention permet à un terminal de s'affranchir du langage applicatif propre à des ressources pour accéder à ces dernières puisqu'un serveur conforme à l'invention effectue une fonction de passerelle entre ce terminal et les ressources.

De fait, le serveur communique avec le terminal selon un protocole de communication standard tant pour recevoir de ce dernier les données d'entrée nécessaires pour accéder aux ressources que pour transmettre à ce dernier les données de sortie issues de ces accès.

Parallèlement, le serveur utilise également ce protocole de communication pour transmettre aux ressources ces données d'entrée et le format structurant la présentation de données pour extraire, des transmissions reçues des ressources, les données de sorties requises par le terminal.

Dans une réalisation, les moyens de mise en oeuvre comprennent une liste de paramètres devant être fournis par un utilisateur du service pour être utilisés comme données d'entrée par le serveur lors de ses accès aux ressources.

Selon une réalisation, les moyens de mise en oeuvre comprennent un formulaire d'URL permettant de générer un URL de la ressource à requérir pour chaque accès en complétant ce formulaire URL à l'aide d'une donnée d'entrée.

Dans une réalisation, les moyens de mise en oeuvre comprennent un formulaire HTTP permettant de déterminer une requête HTTP à transmettre aux ressources pour chaque accès en complétant ce formulaire HTTP à l'aide d'une donnée d'entrée.

Selon une réalisation, le format déterminant des règles de présentation de données est le protocole HTTP - pour « HyperText Transfer Protocol » en anglais.

Dans une réalisation, l'accès aux ressources est effectué à l'aide de commande du type « GET », entraînant une description des ressources du Web identifiées dans la commande, ou de commande du type « POST », entraînant le traitement de données d'entrée, transmises dans la commande, par des ressources du Web également identifiées dans la commande.

Selon une réalisation, le langage applicatif codant les données de sortie est un des langages suivants :
- le langage HTML, pour « HyperText Markup Language » en anglais, dédié notamment à la représentation de pages Web.
- le langage SOAP, pour « Simple Object Access Protocol » en anglais, dédié notamment à l'échange de données entre serveurs ou systèmes du Web.
- le langage RSS, pour « Really Simple Syndication » en anglais, dédié notamment à la diffusion d'alertes, de nouvelles ou de liste sur le Web.

Dans une réalisation, le format de présentation des données est un format à balises tel que le format XML.

L'invention concerne également un serveur d'accès à des ressources du Web destinées à recevoir une donnée d'entrée émise par un terminal, selon un protocole de communication standard, pour déterminer une donnée de sortie codée selon un langage applicatif conforme à un format déterminant des règles de présentation de données, **caractérisé en ce qu**'il comprend des moyens pour :
- recevoir d'un terminal des données d'entrée comprenant notamment une adresse de ressources du Web,
- générer une séquence d'accès successifs aux ressources du Web à partir de ces données d'entrée,
- mettre en oeuvre automatiquement cette séquence d'accès entre le serveur et les ressources du Web en effectuant :
   i) l'émission par le serveur, selon le protocole de communication standard, d'une donnée d'entrée utilisée par les ressources pour générer une donnée de sortie, transmise au serveur, codée selon le langage applicatif conforme au format d'affichage,
   ii) l'extraction par le serveur de la donnée de sortie transmise par les ressources en utilisant le format d'affichage de données pour identifier cette donnée de sortie dans la transmission émise par les ressources,
- transmettre les données de sortie ainsi extraites vers le terminal selon le protocole de communication standard.

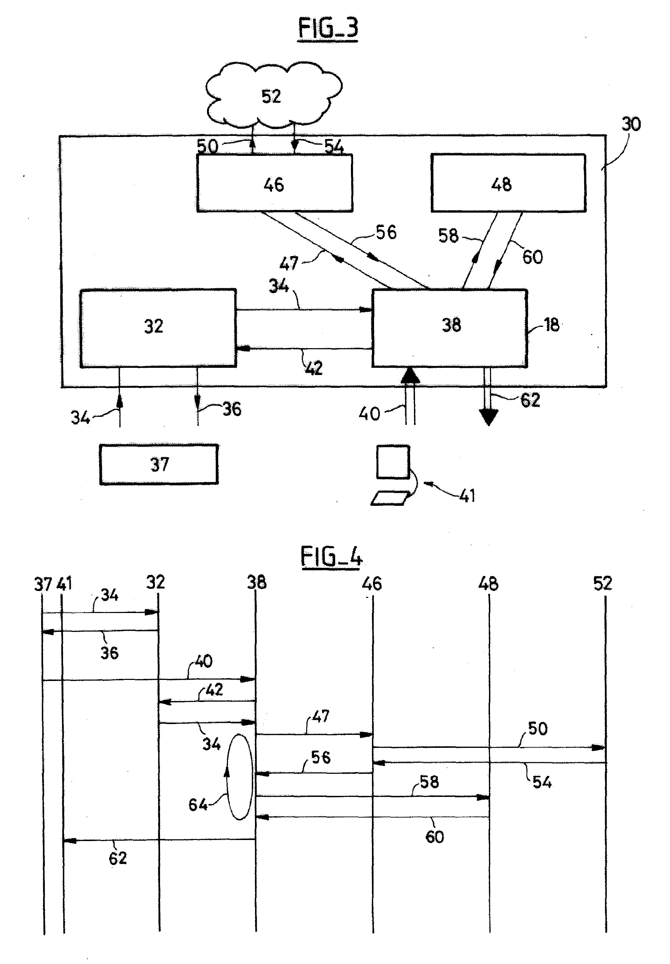

La présente invention sera mieux comprise à la lumière de la description effectuée ci-dessous, à titre illustratif et non limitatif, d'une réalisation de l'invention faite en référence aux figures ci-jointes sur lesquels :
- la figure 1, déjà décrite, illustre l'accès à des ressources du Web selon un procédé conforme à l'art antérieur,
- la figure 2 illustre l'accès à des ressources du Web selon un procédé conforme à l'invention,
- la figure 3 représente schématiquement la structure d'un serveur comprenant des moyens pour mettre en oeuvre l'invention, et
- la figure 4 est un diagramme représentant les étapes mises en oeuvre par un procédé conforme à l'invention.
   En référence à la figure 2, un terminal 20 peut accéder à des ressources 22 pour obtenir des données de sorties 26 à partir de données d'entrée 24 indépendamment du langage applicatif utilisé par ces ressources 22.
   De fait, conformément à l'invention, les valeurs d'entrées 24 sont transmises à un serveur 28 selon un protocole de communication standard tel que le protocole HTTP.
   Par la suite, le serveur 28 génère une séquence 25 d'accès successifs aux ressources, chaque accès utilisant différentes valeurs d'entrée et générant une valeur de sortie transmise selon le langage applicatif conforme à l'application mise en oeuvre par les ressources.
   Par exemple, ce langage applicatif peut être le langage HTML pour l'accès à des pages Web ou le langage SOAP pour l'accès à des commandes de serveur.
   Un traitement interne 27 au serveur 28 permet d'identifier les données de sortie transmises par les ressources suite à ces accès 25. Pour ce faire, le serveur 28 utilise des règles de codages prédéterminées propres à un format déterminant des règles de présentation de données.
   Dans cet exemple, ces règles de codage respectent un format à balises tel que le format XML et la localisation des données de sortie est facilitée par une déclaration préalable du prestataire de service comme décrit ultérieurement.
   A partir d'une donnée de sortie, le serveur 28 peut déterminer une donnée d'entrée pour un accès ultérieur aux ressources 22. Ainsi, l'invention permet d'accéder à des ressources requérant la transmission de plusieurs données d'entrées.
   En référence à la figure 3 est décrite la structure d'un serveur 30 conforme à l'invention. Un tel serveur 30 comprend un registre 32 de déclarations de services qui comprend des moyens pour recevoir et mémoriser des requêtes 34 déclarant des services dont les ressources sont destinées à être accessibles via le serveur 30.
   À cet effet, les requêtes 34 doivent indiquer une adresse des ressources
- par exemple sous la forme d'un nom du service associé à ces ressources - et des moyens de mise en oeuvre des différentes opérations devant être effectuées par le serveur 30 pour accéder à ce service.

Notamment, ces moyens comprennent la description d'une séquence d'accès successifs qui doivent être effectués par le serveur 30 auprès des ressources considérées.

Par exemple, en considérant un service de prévision météorologique payant, les accès successifs peuvent comprendre la séquence suivante :
- l'accès aux ressources du service pour indiquer un lieu pour la prévision,
- l'accès aux ressources du service pour indiquer une date de prévision,
- l'accès aux ressources pour indiquer un numéro d'abonné au service.

En outre, ces moyens doivent comprendre la liste des paramètres devant être fournis par un utilisateur du service pour permettre la réalisation de commandes « GET » ou « PST » à partir de formulaire URL ou HTTP également fournis par le fournisseur de service.

Plus précisément, le formulaire d'URL doit permettre de déterminer un URL des ressources à requérir pour chaque accès de la séquence en utilisant des données d'entrée pour remplir ce formulaire URL.

De même, un formulaire HTTP doit permettre de déterminer une requête HTTP visant les ressources à requérir lors de chaque accès de la séquence en utilisant des données d'entrée pour remplir ce formulaire HTTP.

Finalement, ces moyens indiquent une ou plusieurs donnée(s) de sortie devant être émise par les ressources. En outre, les moyens comprennent une indication de la structure attendue de cette émission qui doit être conforme au format d'affichage XML.

Selon l'exemple relatif à un service de prévisions météorologiques, ce dernier peut être déclaré au registre 32 en indiquant la définition suivante:
- un nom de service tel qu'un URL : « prévision météorologique.fr »
- des paramètres à fournir par l'utilisateur du service tels que : « pays pour la prévision », « ville de la prévision », « date de la prévision » et « numéro d'abonné au service ».
- une séquence d'opérations à suivre pour effectuer des accès successifs tels que : une saisie du pays de la prévision, une saisie de la ville de la prévision, une saisie de la date de la prévision et une saisie d'un numéro d'abonné au service de prévision
- des données de sortie à obtenir tels qu'une température, un degré d'humidité, un degré d'ensoleillement et une facture.

Lorsque le registre 32 a ainsi stocké la définition d'un service, il peut émettre une information 36 relative au statut de ce service, par exemple accessible ou refusé.

Le serveur 30 comprend également une unité 38 de traitement des requêtes 40 d'accès à un service. Plus précisément, cette unité 38 reçoit une telle requête 40 afin d'en extraire des données d'entrée nécessaires à la mise en oeuvre du service requis.

Suivant l'exemple précédemment mentionné d'un service de prévision météorologique, une requête 40 d'accès pourrait comprendre les données d'entrée suivantes:
- le nom du service requis : « prévision météorologique.fr »
- les paramètres suivant : « France » et «Rennes » pour respectivement le pays et la ville de la prévision, « 14 Juillet 2008 » pour la date de la prévision et « 75A » pour le numéro d'abonné au service.

Par la suite, l'unité 38 effectue la transmission 42 du nom du service indiqué dans la requête 40 vers le registre 32. Ainsi, ce dernier transmet la définition 44 - nom, données d'entrées et moyens de mise en oeuvre - de ce service à l'unité 38.

A partir de cette définition, l'unité 38 met en oeuvre les différents accès requis en utilisant des données d'entrée indiquées par l'utilisateur dans sa requête 40.

Pour cela, l'unité 38 fait appel à une interface 46 et à un extracteur 48 XML de la façon suivante :
- l'interface 46 reçoit le formulaire URL et les données d'entrée afin de compléter le formulaire URL à partir de ces dernières.
   Lorsqu'une commande « POST » doit être émise, l'unité 38 transmet également le formulaire HTTP afin que l'interface 46 complète ce dernier avec des paramètres comme donnée d'entrée.
   Ainsi, l'interface 46 génère un URL transmis à partir d'un message « GET », et éventuellement un corps de requête HTTP dans le cas d'un message « POST » vers les ressources Web 52.
   A la suite de cette requête 50, les ressources 52 envoient une réponse 54 conforme au format XML, par exemple en langage applicatif SOAP, XHTML ou HTML.
   La passerelle 46 effectue la transmission 56 de cette réponse 54 vers l'unité 38 qui la renvoie - étape 58 - vers l'extracteur 48.
- L'extracteur 48 reçoit ainsi les éléments XML reçus par la passerelle 46 ainsi qu'une liste de résultats devant être obtenus dans à partir de la réponse 54.

À partir de cette transmission 58, l'extracteur 48 peut identifier une donnée de sortie attendue codée selon un format de présentation XML. Cette donnée de sortie, par exemple un nom ou une valeur, fait ensuite l'objet d'une transmission 60 vers l'unité 38.

Cette dernière mémorise les données de sortie ainsi obtenues afin de les transmettre lors d'une dernière opération 62. Toutefois, une première donnée de sortie obtenue lors d'un premier accès peut être également requise comme donnée d'entrée pour un second accès.

Dans ce cas, l'unité 38 ajoute cette première donnée de sortie dans les paramètres pris en compte pour transmettre des données d'entrées lors d'accès ultérieurs.

En référence à la figure 4, les éléments et les opérations décrites ci-dessous sont illustrés sous la forme d'un diagramme. Plus précisément, ce diagramme représente notamment:
- les communications 34 et 36 entre le fournisseur de service 37 et le registre 32 lors de la déclaration d'un service,
- les communications 40 et 62, selon le protocole de communication standard, entre le terminal 41 et l'unité 38,
- les communications 50, selon le protocole de communication standard, et 54, selon le langage applicatif des ressources 52, entre l'interface 46 et ces ressources 52, et
- la séquence 64 d'accès aux ressources aboutissant aux données de sortie fournies au terminal.

## Revendications

1. Procédé d'accès à des ressources (52) du Web destinées à recevoir une donnée d'entrée émise par un terminal (41), selon un protocole de communication standard (HTTP), pour déterminer une donnée de sortie codée selon un langage applicatif (HTML, SOAP) conforme à un format (XML) déterminant des règles de présentation de données, **caractérisé en ce qu'**il comprend les étapes suivantes:
- l'étape pour le terminal (41) de transmettre à un serveur (30) d'accès des données d'entrée (40) comprenant notamment une adresse de ces ressources (52) du Web,
- l'étape pour le serveur (30) de générer une séquence d'accès (50) successifs aux ressources (52) du Web à partir de ces données d'entrée,
- l'étape de mettre en oeuvre automatiquement cette séquence d'accès (50) entre le serveur (30) et les ressources (52) du Web en effectuant pour chaque accès:
i) l'émission (50) par le serveur, selon le protocole de communication standard (HTTP), d'une donnée d'entrée utilisée par les ressources (52) pour générer une donnée de sortie transmise (54) au serveur (30) et codée selon le langage applicatif (HTML, SOAP) conforme au format (XML) de présentation de données,
ii) l'extraction par le serveur (30) de la donnée de sortie transmise par les ressources (52) en utilisant le format (XML) de présentation de données pour identifier cette donnée de sortie dans la transmission (54) émise par les ressources (52),
- l'étape pour le serveur (30) de transmettre (62) les données de sortie ainsi extraites vers le terminal (41) selon le protocole de communication standard (HTTP) ;
- l'étape de transmettre au serveur (30) une définition des ressources indiquant une adresse (URL) de ces ressources (52) et des moyens de mise en oeuvre de différentes opérations devant être suivies par le serveur (30) pour accéder à un service via ces ressources, les moyens de mise en oeuvre comprenant la description d'une séquence d'accès successifs qui doivent être effectués par le serveur (30) auprès des ressources (52) pour obtenir le service.

2. Procédé selon la revendication 1 **caractérisé en ce que** les moyens de mise en oeuvre comprennent une liste de paramètres devant être fournis par un utilisateur du service pour être utilisés comme données d'entrée par le serveur (30) lors des accès aux ressources (52).

3. Procédé selon l'une des revendications 1 ou 2 **caractérisé en ce que** les moyens de mise en oeuvre comprennent un formulaire d'URL permettant de générer un URL de la ressource (52) à requérir pour chaque accès en complétant ce formulaire URL à l'aide d'une donnée d'entrée.

4. Procédé selon l'une des revendications 1 à 3 **caractérisé en ce que** les moyens de mise en oeuvre comprennent un formulaire HTTP permettant de déterminer une requête HTTP à transmettre aux ressources pour chaque accès en complétant ce formulaire HTTP à l'aide d'une donnée d'entrée.

5. Procédé selon l'une des revendications précédentes **caractérisé en ce que** le protocole de communication standard est le protocole HTTP - pour « HyperText Transfer Protocol » en anglais.

6. Procédé selon la revendication 5 **caractérisé en ce que** l'accès aux ressources est effectué à l'aide d'une commande du type « GET », entraînant une description des ressources du Web identifiées dans la commande, ou d'une commande du type « POST », entraînant le traitement de données d'entrée, transmises dans la commande, par des ressources du Web également identifiées dans la commande.

7. Procédé selon l'une des revendications précédentes **caractérisé en ce que** le langage applicatif codant les données de sortie est un des langages suivants :
- le langage HTML, pour « HyperText Markup Language » en anglais, dédié notamment à la représentation de pages Web.
- le langage SOAP, pour « Simple Object Access Protocol » en anglais, dédié notamment à l'échange de données entre serveurs ou systèmes du Web.
- le langage RSS, pour « Really Simple Syndication » en anglais, dédié notamment à la diffusion d'alertes, de nouvelles ou de liste sur le Web.

8. Procédé selon l'une des revendications précédentes **caractérisé en ce que** le format de présentation des données est un format à balises tel que le format XML.

9. Serveur (30) d'accès à des ressources (52) du Web destinées à recevoir une donnée d'entrée émise par un terminal (41), selon un protocole de communication standard (HTTP), pour déterminer une donnée de sortie codée selon un langage applicatif (HTML, SOAP) conforme à un format (XML) déterminant des règles de présentation de données, **caractérisé en ce qu'**il comprend :
- des moyens pour :
o recevoir d'un terminal (41) des données d'entrée (40) comprenant notamment une adresse de ressources (52) du Web,
o générer une séquence d'accès (50) successifs aux ressources (52) du Web à partir de ces données d'entrée (40),
o mettre en oeuvre automatiquement cette séquence d'accès (50) entre le serveur (30) et les ressources (52) du Web en effectuant pour chaque accès :
i) l'émission par le serveur, selon le protocole de communication standard, d'une donnée d'entrée utilisée par les ressources pour générer une donnée de sortie, transmise au serveur, codée selon le langage applicatif conforme au format d'affichage,
ii) l'extraction par le serveur de la donnée de sortie transmise par les ressources en utilisant le format d'affichage de données pour identifier cette donnée de sortie dans la transmission émise par les ressources,
o transmettre les données de sortie ainsi extraites vers le terminal selon le protocole de communication standard ;
- des moyens pour recevoir et mémoriser des requêtes déclarant des services dont les ressources sont destinées à être accessibles via le serveur, lesdites requêtes indiquant une adresse des ressources et des moyens de mise en oeuvre comprenant la description d'une séquence d'accès successifs qui doivent être effectués par le serveur auprès des ressources considérées pour obtenir le service.
